# EUROPEAN PATENT SPECIFICATION

(11) **EP 4 293 985 B1**
(45) Date of publication and mention of the grant of the patent: **14.01.2026**
(21) Application number: 22770346.9
(22) Date of filing: 08.03.2022
(51) Int. Cl.: H04L 61/5038, E05B 47/00, E05B 65/52

(54) **ID NUMBER SETTING METHOD AND SYSTEM HAVING MASTER DEVICE AND SLAVE DEVICE**
ID-NUMMEREINSTELLVERFAHREN UND SYSTEM MIT MASTER- UND SLAVE-VORRICHTUNG
PROCÉDÉ DE RÉGLAGE DE NUMÉRO ID ET SYSTÈME AYANT UN DISPOSITIF MAÎTRE ET UN DISPOSITIF ESCLAVE

(30) Priority: 16.03.2021 CN 202110282906
(43) Date of publication of application: 20.12.2023
(73) Proprietor: Weihai New Beiyang Digital Technology Co., Ltd., Weihai, Shandong 264203 (CN); Shandong New Beiyang Information Technology Co., Ltd., Weihai, Shandong 264203 (CN)
(72) Inventor: WANG, Chuntao, Weihai, Shandong 264203 (CN); DING, Jinfeng, Weihai, Shandong 264203 (CN); JIANG, Tianxin, Weihai, Shandong 264203 (CN)
(74) Representative: Cabinet Beaumont
(86) International application number: PCT/CN2022/079705
(87) International publication number: WO 2022/193991

(56) References cited:
- CN-A- 101 477 506
- CN-A- 108 616 610
- CN-A- 109 981 821
- CN-A- 111 245 635
- CN-A- 113 055 504
- US-A- 5 481 750

## Description

### TECHNICAL FIELD

The present application relates to the field of automation devices, for example, an identification (ID) number setting method, and a system having master and slave devices.

### BACKGROUND

In the related art, a medium processing system such as a copier, a printer and an all-in-one machine for printing, scanning and sealing or a storage system such as a delivery locker and a material locker includes a master device and multiple slave devices. The master device is configured to send control commands to the multiple slave devices and receive response commands from the multiple slave devices. In the preceding system having master and slave devices, the master device needs to set a unique identification (ID) number for each slave device. When the system is working, the master device sends a control command to and recognizes a response command from a slave device based on the ID number of the slave device.

The related art discloses a system having master and slave devices. Each slave device is equipped with a DIP switch. The user may manually set the DIP switch of each slave device to a different state, and the master device sets a unique identification number for each slave device based on the state of the DIP switch of the each slave device. However, as the number of states that can be set for each DIP switch is limited, the maximum number of slave devices in the system is limited to the number of states that the DIP switch can be set to. Therefore, the number of slave devices in the system cannot be arbitrarily expanded, resulting in poor flexibility in the use of the system.

Patent US5481750A is prior art for the present invention.

### SUMMARY

The present application provides an identification (ID) number setting method and a system having master and slave devices so that limitations on the number of slave devices in the system is removed, and the system has relatively high flexibility in use.

The invention is defined by the appended claims.

In a first aspect, the present application provides an ID number setting method which is applied to a system having master and slave devices. The system includes a master device and multiple slave devices, each slave device includes a detection component and a target object, the target object is capable of being in a first state or a second state, the detection component is configured to detect the state of the target object, and the ID number setting method includes steps described below:
The master device broadcasts a notification of entering an ID number setting mode to all of the slave devices;
After receiving the notification of entering the ID number setting mode, each slave device periodically detects the state of the target object of the each slave device, and in response to detecting that the state of the target object of one slave device is changed from the first state to the second state, the one slave device sends an ID number setting request to the master device;
After receiving an ID number setting request from any slave device, the master device generates a target ID number and broadcasts a setting command of the target ID number to all of the slave devices;
After receiving the setting command of the target ID number, each slave device determines whether it is in an ID number pending state, and in response to determining that it is in the ID number pending state, it sets the ID number of its own as the target ID number.

In a second aspect, the present application provides a system having master and slave devices. The system includes a master device and multiple slave devices. The master device includes a first controller, each slave device includes a second controller, a detection component and a target object, the target object is capable of being in a first state or a second state, and the detection component is configured to detect the state of the target object.

The first controller of the master device is configured to broadcast a notification of entering an ID number setting mode to second controllers of all of the slave devices.

The second controller of the each slave device is configured to, after receiving the notification of entering the ID number setting mode, periodically detect the state of the target object of the each slave device, and in response to detecting that the state of the target object of one slave device is changed from the first state to the second state, send an ID number setting request to the first controller of the master device.

The first controller of the master device is further configured to, after receiving an ID number setting request from the second controller of any slave device, generate a target ID number, and broadcast a setting command of the target ID number to the second controllers of all of the slave devices.

The second controller of the each slave device is further configured to, after receiving the setting command of the target ID number, determine whether the slave device to which the second controller belongs is in an ID number pending state, and in response to determining that the slave device to which the second controller belongs is in the ID number pending state, set the ID number of the slave device to which the second controller belongs as the target ID number.

### BRIEF DESCRIPTION OF DRAWINGS

FIG. 1 is a block diagram showing the composition of a system having master and slave devices according to an embodiment of the present application;
FIG. 2 is a flowchart of an ID number setting method according to an embodiment of the present application;
FIG. 3 is a structural view of a storage locker according to an embodiment of the present application;
FIG. 4 is a block diagram showing the composition of a storage locker according to an embodiment of the present application;
FIG. 5 is a block diagram showing the composition of a storage locker according to another embodiment of the present application;
FIG. 6 is a structural view of a sheet medium processing device according to an embodiment of the present application; and
FIG. 7 is a block diagram showing the composition of a sheet medium processing device according to an embodiment of the present application.

### Reference list

- 010: system having master and slave devices
- 011: master device
- 012: first controller
- 013: slave device
- 014: second controller
- 015: target object
- 016: detection component
- 100: storage locker
- 110: storage compartment
- 111: compartment body
- 112: compartment door
- 113: electric lock
- 200: sheet medium processing device
- 210: base frame
- 220: printing mechanism
- 230: scanning mechanism
- 240: sealing mechanism
- 250: conveying mechanism
- 260: sheet box
- 261: box body

### DETAILED DESCRIPTION

The related art discloses a system having master and slave devices. A master device includes a main control board, each slave device includes a sub-control board and a DIP switch, the DIP switch is connected to the sub-control board of the slave device through multiple input interfaces, and the sub-control board is in communication with the main control board. When mounting a slave device for the master device, the user manually sets DIP switches of multiple slave devices to different states. During initialization of the system, each sub-control board detects the state of a corresponding DIP switch and sends the state to the main control board, and the main control board sets the identification (ID) number of each slave device according to the state of the DIP switch of each slave device.

In the system in the related art, the master device sets the ID number of the slave device according to the state of the DIP switch of the slave device. It is found that the system in the related art has the following problem: once a slave device leaves the factory, the number of digits of the DIP switch included by the slave device is determined; therefore, the number of states that the DIP switch can represent is also determined, resulting in the maximum number of slave devices in the system being limited by the DIP switch of the slave device. For example, a two-digit DIP switch is connected to the sub-control board of the slave device through two input interfaces, and the DIP switch can only represents four states, that is, "00", "01", "10" and "11". In this case, the master device can only be connected up to four slave devices; if one more slave device is added, it is difficult to use the preceding method to set a unique ID number for the one more slave device. Therefore, the number of slave devices included in the system in the related art cannot be arbitrarily expanded, resulting in poor flexibility in the use of the system.

To improve the problem of poor flexibility of the system caused by that the ID number is set according to the state of the DIP switch, embodiments of the present application provides an ID number setting method of a slave device and a system having master and slave devices. In this manner, the ID number of the slave device is no longer set according to the state of the DIP switch, and limitations on the number of slave devices in the system is removed, so that the flexibility in the use of the system is improved.

Technical solutions in the embodiments of the present application will be described clearly and completely in conjunction with drawings in the embodiments of the present application. Generally, the components of the embodiments of the present application described and illustrated in the drawings herein may be arranged and designed through various types of configuration.

It is to be noted that similar reference numerals and letters indicate similar items in subsequent drawings. Therefore, once some item is defined in one drawing, the item needs no more definition and explanation in the subsequent drawings.

In the description of the present application, it is to be noted that the orientational or positional relationships indicated by terms "above", "below", "inside", "outside" and the like are based on the orientational or positional relationships illustrated in the drawings or the orientational or positional relationships that products are usually used in. These orientational or positional relationships are intended only to facilitate and simplify the description of the present application and not to indicate or imply that the apparatus or element referred to must have a specific orientation or must be constructed and operated in a specific orientation, and thus are not to be construed as limiting the present application.

Moreover, terms "first" and "second" are merely for distinguishing the description and are not to be construed as indicating or implying relative importance.

It is to be noted that if not in collision, features in the embodiments of the present application may be combined with each other.

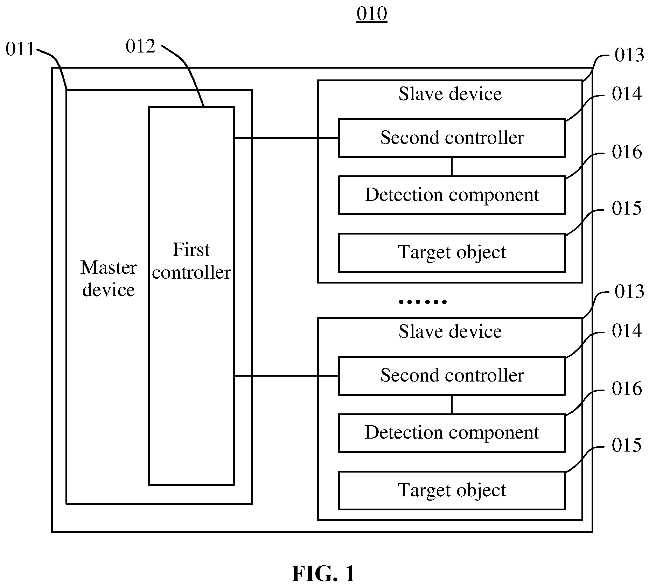

FIG. 1 is a block diagram showing the composition of a system 010 having master and slave devices according to an embodiment of the present application. As shown in FIG. 1, an embodiment of the present application provides a system 010 having master and slave devices. The system includes a master device 011 and multiple slave devices 013. Each slave device 013 is in communication with the master device 011, and the master device 011 is configured to be capable of sending a control command to multiple slave devices 013 and receiving a response command from each slave device 013. The master device 011 includes a first controller 012. Each slave device 013 includes a second controller 014, a detection component 016 and a target object 015. The detection component 016 is electrically connected to the second controller 014. The target object 015 is capable of being in a first state or a second state, the detection component 016 is configured to detect the state of the target object 015, and the second controller 014 acquires the state of the target object 015 through the detection component 016. The communication between the first controller 012 and the second controller 014 may be achieved through wired connection or wireless connection (such as Bluetooth or Wi-Fi).

In the embodiment of the present application, the first controller 012 of the master device 011 is configured to broadcast a notification of entering an ID number setting mode to second controllers 014 of all of the slave devices 013. The second controller 014 of each slave device 013 is configured to, after receiving the notification of entering the ID number setting mode, periodically detect the state of the target object 015, and when detecting that the state of the target object 015 is changed from the first state to the second state, send an ID number setting request to the first controller 012 of the master device 011. The first controller 012 of the master device 011 is further configured to, after receiving an ID number setting request from the second controller 014 of any slave device 013, generate a target ID number, and broadcast a setting command of the target ID number to the second controllers of all of the slave devices 013. The second controller 014 of each slave device 013 is further configured to, after receiving the setting command of the target ID number, determine whether the slave device 013 to which the second controller 014 belongs is in an ID number pending state, and when determining that the slave device 013 to which the second controller 014 belongs is in the ID number pending state, set the ID number of the slave device 013 to which the second controller 014 belongs as the target ID number.

In the system provided in the embodiment of the present application, the master device 011 generates a unique target ID number according to the change in the state of the target object 015 of the slave device 013, and broadcasts the setting command of the target ID number to all of the slave devices 013, and a slave device 013 of which the ID number is to be set sets the ID number of the slave device 013 as the target ID number. Therefore, when setting ID numbers of slave devices 013 in the system, the user only needs to sequentially change states of target objects 015 of multiple slave devices 013 in a time division manner so that setting of ID numbers of the multiple slave devices can be sequentially completed. The system provided in the embodiment of the present application no longer uses the state of a DIP switch to set a unique ID number for a slave device 013. Therefore, the number of slave devices 013 in the system can be arbitrarily set, solving the problem in the related art where the maximum number of slave devices 013 in the system is limited by the DIP switch of the slave device 013, and improving the flexibility in the use of the system. Moreover, in the system, it is not necessary to set an additional DIP switch for ID number setting in the slave device 013, so that the costs of the system are reduced.

Optionally, the system of the embodiment of the present application further includes an upper-level computer (not shown in the figure). The master device 011 is in communication with the upper-level computer, and the master device 011 is configured to receive a command from the upper-level computer and is capable of broadcasting the notification of entering the ID number setting mode to all of the slave devices 013 based on the command sent by the upper-level computer. For example, the user may send a setting command of an ID number to the master device 011 through the upper-level computer, and the master device 011 broadcasts the notification of entering the ID number setting mode to all of the slave devices 013 after receiving the command.

Optionally, the first controller 012 of the master device 011 is configured to, after receiving the ID number setting request from the second controller 014 of any slave device 013, determine a reception serial number of the received ID number setting request, and generate the target ID number according to the reception serial number.

Optionally, the second controller 014 of each slave device 013 is configured to, after receiving the setting command of the target ID number, determine whether the value of the ID number of the slave device 013 to which the second controller 014 belongs is an invalid value and whether the slave device 013 to which the second controller 014 belongs has sent the ID number setting request to the master device 011 within a set time; and in a case of determining that the value of the ID number of one slave device 013 to which the second controller 014 belongs is an invalid value and that the one slave device 013 to which the second controller 014 belongs has sent the ID number setting request to the master device 011 within a set time, determine that the one slave device 013 to which the second controller 014 belongs is in the ID number pending state.

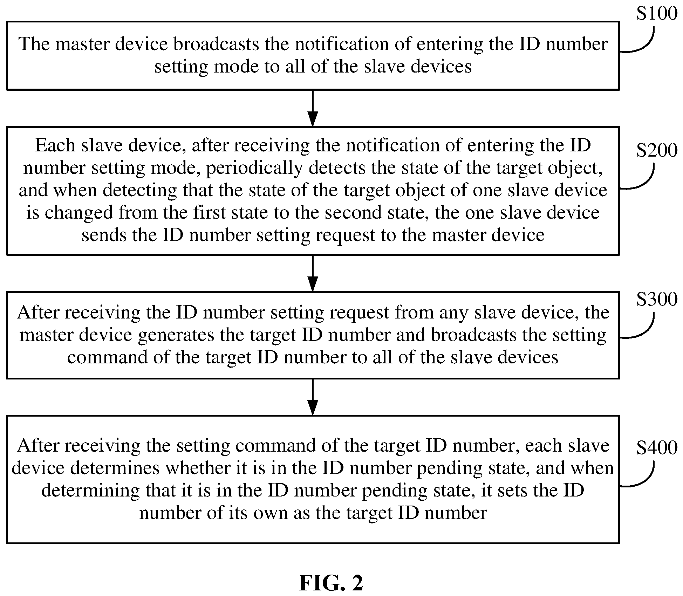

FIG. 2 is a flowchart of an ID number setting method according to an embodiment of the present application. Referring to FIG. 2, the ID number setting method provided in the embodiment is applicable to the system 010 having master and slave devices provided in the embodiment of the present application. The ID number setting method includes steps described below.

In step S100, the master device broadcasts the notification of entering the ID number setting mode to all of the slave devices.

The system provide in the embodiment of the present application is taken as an example. The master device 011 broadcasts the notification of entering the ID number setting mode to all of the slave devices 013 in a wired or wireless manner through the first controller 012. Optionally, in the system having an upper-level computer, the master device 011 receives a first command from the upper-level computer and broadcasts the notification of entering the ID number setting mode to all of the slave devices 013 based on the first command.

In step S200, each slave device, after receiving the notification of entering the ID number setting mode, periodically detects the state of the target object, and when detecting that the state of the target object of one slave device is changed from the first state to the second state, the one slave device sends the ID number setting request to the master device.

The system 010 having master and slave devices provided in the embodiment of the present application is taken as an example. After receiving the notification of entering the ID number setting mode, the second controller 014 of each slave device 013 periodically detects the state of the target object 015 according to information fed back by the detection component 016 to the second controller 014. For example, the second controller 014 acquires the state of the target object 015 once per second through the detection component 016. When states of the target object 015 acquired in two times is respectively the first state and the second state, the second controller 014 sends the ID number setting request to the master device 011.

In step S300, after receiving the ID number setting request from any slave device, the master device generates the target ID number and broadcasts the setting command of the target ID number to all of the slave devices.

The system 010 having master and slave devices provided in the embodiment of the present application is taken as an example. After receiving the ID number setting request from the second controller 014 of any slave device 013, the first controller 012 generates the target ID number and broadcasts the setting command of the target ID number to second controllers 014 of all of the slave devices 013.

In an optional embodiment, the step in which after receiving the ID number setting request from any slave device 013, the master device 011 generates the target ID number includes the step described below. After receiving the ID number setting request from any slave device 013, the master device 011 determines the reception serial number of the received ID number setting request, and generates the target ID number according to the reception serial number. Optionally, the reception serial number of the ID number setting request refers to the ranking of this ID number setting request among all the ID number setting requests received by the master device 011 from the time the master device 011 broadcasts the notification of entering the ID number setting mode to all the slave devices 013.

Optionally, the master device 011 generates the target ID number according to the reception serial number of the ID number setting request and a preset rule. For example, if the preset rule is that the target ID number is the reception serial number of the ID number setting request, when the reception serial number of the ID number setting request is 1, the target ID number is 1; when the reception serial number of the ID number setting request is 5, the target ID number is 5. For another example, if the preset rule is that the target ID number is the sum of a pre-acquired start ID number and the reception serial number of the ID number setting request minus 1 and it is assumed that the pre-acquired start ID number is 51, when the reception serial number of the ID number setting request is 1, the target ID number is 51; when the reception serial number of the ID number setting request is 5, the target ID number is 55.

Optionally, the first command sent by the user through the upper-level computer to the master device 011 includes the start ID number, and the master device 011 determines and stores the start ID number set by the user according to the first command. For example, the system includes sixteen slave devices 013, and the preset rule is that the target ID number is the sum of the pre-acquired start ID number and the reception serial number of the ID number setting request minus 1. When the system is first installed and used, ID numbers of all of the sixteen slave devices 013 need to be set. If the user sends a starting ID number of 0001 for the slave device 013 that needs setting via the upper-level computer, then after receiving the first command from the upper-level computer, the master device 011 sets the starting ID number as 0001. After receives the ID number setting request from a slave device 013, the master device 011 generates the target ID number according to the start ID number and the reception serial number of the ID number setting request. For example, in a case where the reception serial number of the received ID number setting request is 1, the target ID number is determined as 0001; in a case where the ID number of the received ID number setting request is 5, the target ID number is determined as 0005. When the control device (the second controller 014 in the embodiment) of a certain slave device 013 is replaced due to damage, the user determines the ID number (hereinafter referred to as an original ID number) of the slave device 013 before the replacement of the control device, and the start ID number of the slave device 013 to be set which is sent through the upper-level computer is the original ID number. After sending the first command including the original ID number to the master device 011 through the upper-level computer, the user only needs to change the state of the target object 015 of the slave device 013, so that the serial number, received by the master device 011, of the ID number setting request sent by the slave device 013 is 1, and then the ID number of the slave device 013 can be set as the original ID.

Optionally, the ID number setting request includes the state information of the target object 015, and the master device 011 determines according to the state information of the target object 015 that the target object 015 is changed from the first state to the second state and then determines that the ID number setting request sent by the slave device 013 is received.

In step S400, after receiving the setting command of the target ID number, each slave device determines whether it is in the ID number pending state, and when determining that it is in the ID number pending state, it sets the ID number of its own as the target ID number.

The system 010 having master and slave devices provided in the embodiment of the present application is taken as an example. After receiving the setting command of the target ID number, the second controller 014 of each slave device 013 determines whether the slave device 013 to which the second controller 014 belongs is in the ID number pending state, and when determining that the slave device 013 to which the second controller 014 belongs is in the ID number pending state, sets the ID number of the slave device 013 to which the second controller 014 belongs as the target ID number.

In an optional embodiment, the step in which after receiving the setting command of the target ID number, each slave device 013 determines whether it is in the ID number pending state includes steps described below. After receiving the setting command of the target ID number, the each slave device 013 determines whether the value of the ID number of its own is an invalid value and whether it has sent the ID number setting request to the master device 011 within a set time; and in a case of determining that the value of the ID number of one slave device is an invalid value and that the one slave device has sent the ID number setting request to the master device within a set time, the one slave device determines that the one slave device is in the ID number pending state.

In the embodiment, before the ID number of the slave device 013 is not set, the value of the ID number of the slave device 013 is an invalid value. When the slave device 013 determines that the value of the ID number of the slave device 013 is an invalid value and the slave device 013 has sent the ID number setting request to the master device 011 within a set time (such as 30 seconds), the slave device 013 determines that the slave device 013 is in the ID number pending state, and then sets the ID number of the slave device 013 as the target ID number after receiving the setting command of the target ID number. When it is determined that the value of the ID number of the slave device 013 is an invalid value, it is indicated that the ID number of the slave device 013 has not been set; when it is determined that the ID number setting request has been sent to the master device 011 within a set time, it is indicated that the slave device is a slave device of which the ID number needs to be set. In a case where the two conditions are both satisfied, it is determined that the slave device 013 is in the ID number pending state. In another optional implementation, each slave device 013 has a state identifier for representing whether the ID number is set, and the state identifier of each slave device 013 may be set as different values to represent that the slave device 013 is in an ID number-not-set state, the ID number pending state or an ID number-set-state. The slave device 013 modifies the state identifier to change the state of the slave device 013 from the ID number-not-set state to the ID number pending state when sending the ID number setting request to the master device 011, and re-modifies the state identifier to change the state of the slave device 013 from the ID number pending state to the ID number-set-state after the ID number is set.

Optionally, the ID number setting method of the slave device 013 further includes steps described below. Each slave device 013, after setting the ID number of its own as the target ID number, sends a response command including the target ID number to the master device 011; the master device 011, after receiving the response command including the target ID number from the slave device 013, sends information that the target ID number has been successfully set to the upper-level computer. In this manner, the upper-level computer can output prompt information that the target ID number is successfully set to the user so that the user can know whether the ID number of the slave device 013 has been successfully set.

Optionally, after setting of ID numbers of all of the slave devices 013 in the system is completed, the user sends a second command to the master device 011 through the upper-level computer, and the master device 011 broadcasts a notification of exiting the ID number setting mode to all of the slave devices 013 based on the second command.

The preceding is the introduction to the system 010 having master and slave devices and the ID number setting method applicable to the system which are provided in the embodiments of the present application. The system 010 having master and slave devices may be, for example, a medium processing system such as a copier, a printer and an all-in-one machine for printing, scanning and sealing or a storage system such as a delivery locker and a material locker. The system being a storage locker 100 is introduced below.

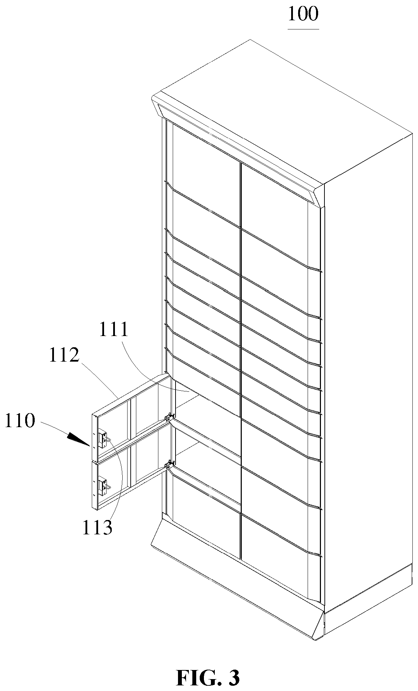

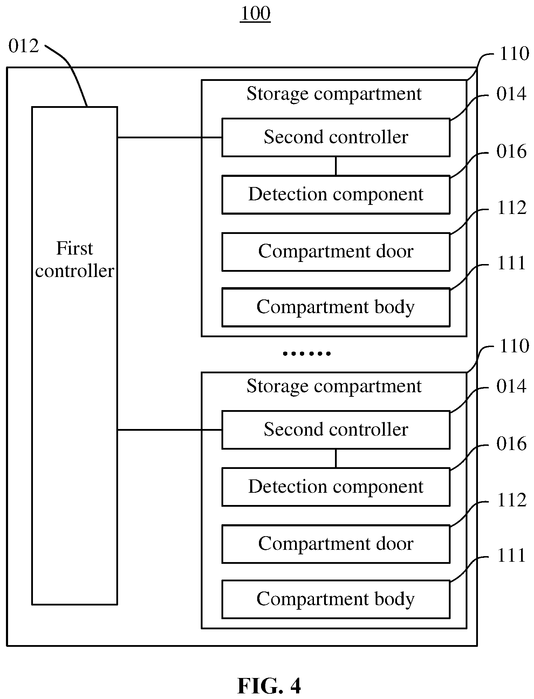

FIG. 3 is a structural view of a storage locker 100 according to an embodiment of the present application, and FIG. 4 is a block diagram showing the composition of a storage locker 100 according to an embodiment of the present application. As shown in FIG. 3 and FIG. 4, the system 010 having master and slave devices provided in the embodiment of the present application is a storage locker 100, which can use the ID number setting method provided in the preceding embodiment of the present application to set ID numbers for multiple storage compartments of the storage locker 100. In the embodiment, the storage locker 100 includes the first controller 012 and multiple storage compartments 110. Each storage compartment 110 includes a compartment door 112 and a compartment body 111 for storing an item. The compartment body 111 has an opening for putting in or taking out the item, the compartment door 112 is movably connected to the compartment body, and the compartment door 112 has an opening position for opening the opening and a closing position for closing the opening. Referring to the system 010 having master and slave devices in the embodiment of FIG. 1, the slave device 013 is the storage compartment 110, and the target object 015 of the slave device 013 is the compartment door 112. The compartment door 112 is in the first state when located at the opening position; the compartment door 112 is in the second state when located at the closing position. The storage compartment 110 further includes the second controller 014 electrically connected to the first controller 012, and the second controller 014 can acquire the state of the compartment door 112 of the storage compartment 110.

In the embodiment, the storage locker 100 is the system having master and slave devices. The first controller 012 is the master device (or part of the master device), the storage compartment 110 is the slave device, and the compartment door 112 is the target object of the storage compartment 110. Therefore, when setting ID numbers of multiple storage compartments 110 of the storage locker 100, the user may first make compartment doors 112 of all of the storage compartments 110 in an open state (for example, open compartment doors 112 of all of the storage compartments 110 of the storage locker 100 at once through an emergency lever of the storage locker 100), then send the first command to the first controller 012 through the upper-level computer, and sequentially close the compartment doors 112 of the multiple storage compartments 110; in this manner, setting of the ID numbers of the multiple storage compartments 110 is sequentially completed. Therefore, the user only needs to sequentially close the compartment doors 112 of the multiple storage compartments 110 so that setting of the ID numbers of the multiple storage compartments 110 is achieved. Compared with the manner in the related art that ID numbers of multiple slave devices are set through different states of DIP switches of the multiple slave devices, the operation in the embodiment of the present application for setting ID numbers of slave devices (storage compartments 110) is simpler, which can improve the efficiency and accuracy of the user setting ID numbers of slave devices.

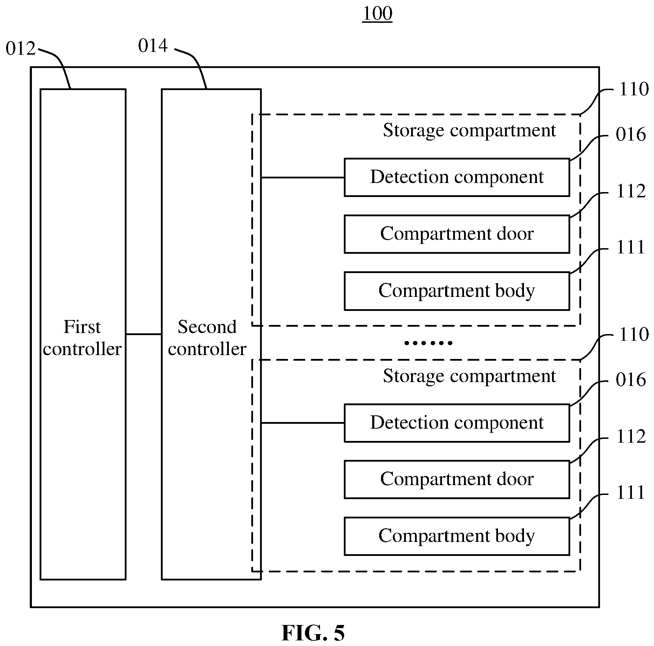

It is to be noted that in the embodiment, the corresponding relationship between the second controller 014 and the compartment body 111 in the storage locker 100 is not limited, as long as the storage locker 100 includes multiple storage compartments 110 (that is, multiple slave devices), and any storage compartment 110 includes a second controller 014, a detection component 016, a compartment body 111 and a compartment door 112. For any storage compartment 110, the second controller 014 in the storage compartment 110 detects the state of the compartment door 112 through the detection component 016 and communicates with the first controller 012 of the master device so that the control function of the system provided in the preceding embodiment of the present application is achieved, and thus setting of the ID number of the storage compartment 110 including the second controller 014, the detection component 016, the compartment body 111 and the compartment door 112 is achieved. As shown in the embodiment of FIG. 4, in an embodiment, each second controller 014 in the storage locker 100 belongs to only one storage compartment 110, and the second controller 014 included in each storage compartment 110 is only configured to set the ID number of the storage compartment 110 to which it belongs, that is, second controllers 014 correspond to compartment bodies 111 in a one-to-one correspondence. FIG. 5 is a block diagram showing the composition of a storage locker according to another embodiment of the present application. As shown in FIG. 5, in another implementation, multiple slave devices correspond to the same second controller 014; corresponding the storage locker 100 in the embodiment of FIG. 3, one second controller 014 may correspond to multiple compartment bodies 111, that is, multiple storage compartments 110 may share one second controller 014. The second controller 014 is electrically connected to multiple detection components 016 of multiple storage compartments 110 separately, and the second controller 014 can recognize each detection component 016 according to a hardware connection relationship, that is, recognize the storage compartment 110 corresponding to each detection component 016 electrically connected to the second controller 014. In this manner, when one detection component 016 detects a change in the state of the compartment door 112 of the storage compartment 110 corresponding to the one detection component 016, the state of the compartment door 112 of which storage compartment 110 is changed is determined, and when the target ID number is acquired through communication with the first controller 012 of the master device, the target ID number is set as the ID number of the storage compartment 110 of which the state of the compartment door 112 is changed. For any slave device including the second controller 014, the compartment body 111, the compartment door 112 and the detection component 016, the second controller 014 within the slave device can use the preceding manner to complete setting of the ID number of the slave device, that is, complete setting of the ID number of the storage compartment 110. For example, one second controller 014 corresponds to a first storage compartment and a second storage compartment, and correspondingly, the system includes a first slave device (that is, the first storage compartment) and a second slave device (that is, the second storage compartment). A first slave device includes a second controller 014, a first compartment door, a first compartment body and a first detection component, and the second controller 014 can achieve setting of the ID number of a first slave device in the preceding manner; the second slave device includes the same second controller 014, a second compartment door, a second compartment body and a second detection component, and the second controller 014 can also achieve setting of the ID number of the second slave device in the preceding manner. The second controller 014 in the implementation, after receiving the notification of entering the ID number setting mode, periodically detects states of compartment doors 112 of all of the storage compartments 110 corresponding to the second controller 014, when detecting that the state of the compartment door 112 of a storage compartment 110 is changed from the first state to the second state, marks the storage compartment 110 according to the hardware connection relationship, sends the ID number setting request to the first controller 012 of the master device, and after receiving the setting command of the target ID number which is sent by the first controller 012 of the master device, sets the ID number of the marked storage compartment 110 as the target ID number.

Optionally, an electric lock 113 is disposed between the compartment door 112 of each storage compartment 110 and the compartment body 111 of the each storage compartment 110. When the electric lock 113 is locked, the compartment door 112 is locked at the closing position, and when the electric lock 113 is unlocked, the compartment door 112 is located at the opening position. The electric lock 113 is electrically connected to the second controller 014. The second controller 014 of each slave device 013 is further configured to, before periodically detecting the state of the compartment door 112, control the electric lock 113 to be unlocked to enable the compartment door 112 to be located at the opening position. Exemplarily, the second controller 014 sends an unlocking control signal to the electric lock 113. After the electric lock 113 receives the control signal, the power component (such as a motor and an electromagnet) of the electric lock 113 moves such that the electric lock 113 is changed from a locked state to an unlocked state, so that the electric lock 113 releases the compartment door 112, and the compartment door 112 is located at the opening position. In an optional implementation, a resilient member is disposed between the compartment door 112 and the compartment body 111, and the resilient member has a tendency to move the compartment door 112 towards the opening position. When the electric lock 113 is unlocked, the compartment door 112 moves from the closing position to the opening position under the resilient force of the resilient member.

In an optional implementation, the second controller 014 of each slave device 013 controls the electric lock 113 to be unlocked in response to the notification of entering the ID number setting mode. Exemplarily, after receiving the notification of entering the ID number setting mode, the second controller 014 of each slave device 013 sends a control signal of unlocking to the electric lock 113 to control the electric lock 113 to be unlocked to enable the compartment door 112 to be located at the opening position, and then the second controller 014 starts to periodically detect the state of the compartment door 112. In another implementation, the notification of entering the ID number setting mode includes an unlocking command, and after receiving the notification of entering the ID number setting mode, the second controller 014 of each slave device 013 parses data included in the notification; when the unlocking command is parsed, the second controller 014 sends the control signal of unlocking to the electric lock 113 to control the electric lock 113 to be unlocked to enable the compartment door 112 to be located at the opening position, and then the second controller 014 starts to periodically detect the state of the compartment door 112.

In the embodiment, before periodically detecting the state of the compartment door 112, the second controller 014 controls the electric lock 113 to be unlocked to enable the compartment door 112 to be in the first state. In this manner, before the second controller 014 periodically detects the state of the compartment door 112, the compartment door 112 is in the first state, so that after the user changes the state of the compartment door 112, the second controller 014 can detect that the compartment door 112 is changed from the first state to the second state, and thus the second controller 014 can send the ID number setting request to the first controller 012 of the master device. This embodiment enhances the convenience of setting the ID number of the storage compartment by eliminating the need for manual opening of the compartment door 112 of the storage compartment 110 before setting the ID number of the storage compartment 110.

Optionally, each storage compartment 110 further includes a first sensor. The first sensor is configured to detect whether the compartment door 112 is located at the opening position or the closing position, and the detection component 016 is the first sensor. The first sensor may be a photoelectric sensor, a mechanical sensor, a proximity switch, etc. In an optional implementation, the first sensor is disposed in the compartment body 111. When the compartment door 112 located at the closing position, it can cooperate with the first sensor, and when the compartment door 112 located at the opening position, it can be separated from the first sensor. When the compartment door 112 cooperates with the first sensor or the compartment door 112 is separated from the first sensor, the first sensor outputs different signals, and the second controller 014 determines the state of the compartment door 112 according to the signals output by the first sensor. In the embodiment where the electric lock 113 is disposed between the compartment door 112 of each storage compartment 110 and the compartment body 111 of the each storage compartment 110, the electric lock 113 may further include a second sensor. The second sensor is configured to detect whether the electric lock 113 is in the locked state or the unlocked state, and in this case, the detection component 016 may be the second sensor. In an optional implementation, the electric lock 113 includes a latch (not shown in the figure) and a latch hook (not shown in the figure). When the electric lock 113 is locked, the latch hook cooperates with the latch, and when the electric lock 113 is unlocked, the latch hook is separated from the latch. The second sensor is disposed inside the housing (not shown in the figure) of the electric lock 113, and the second sensor is configured to detect the action and/or position of the latch hook. When the electric lock 113 is locked or the electric lock 113 is unlocked, the second sensor outputs different signals, and the second controller 014 determines the state of the electric lock 113 according to the signals output by the second sensor. It is to be understood that selecting the first sensor or the second sensor as the detection component 016 is based on the premise that the slave device is the storage compartment 110. In other embodiments, the form of the detection element 016 is not limited to the forms listed above and may be selected according to the structure of the slave device.

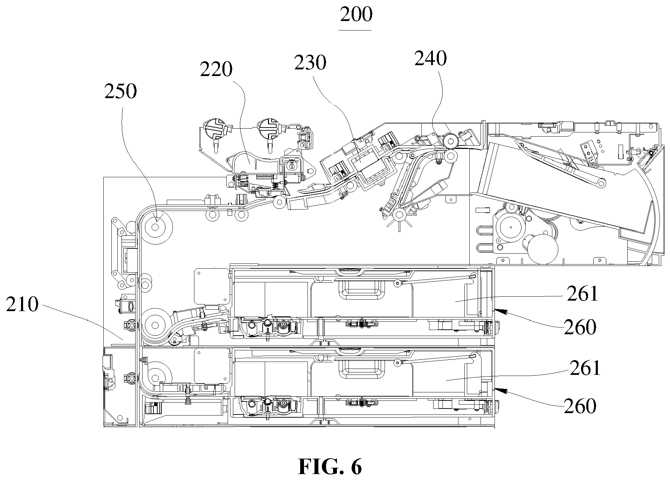

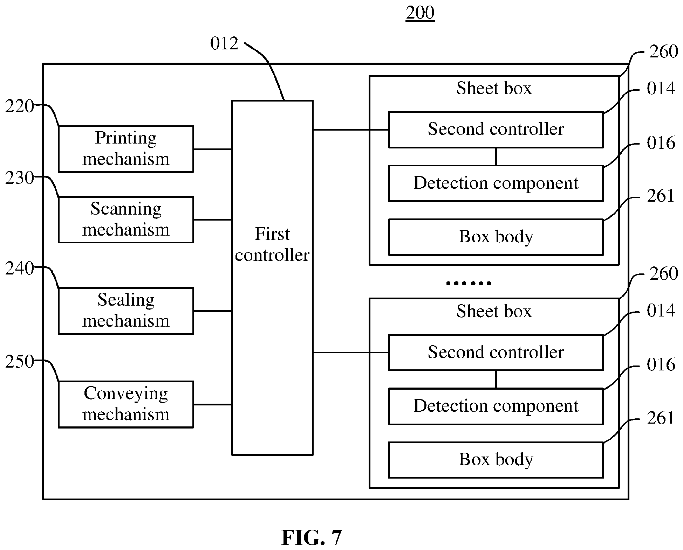

FIG. 6 is a structural view of a sheet medium processing device 200 according to an embodiment of the present application, and FIG. 7 is a block diagram showing the composition of a sheet medium processing device 200 according to an embodiment of the present application. The system 010 having master and slave devices provided in the preceding embodiment of the present application may also be a sheet medium processing device 200 shown in FIG. 6 and FIG. 7. In the embodiment, the sheet medium processing device 200 is an all-in-one machine for printing, scanning and sealing including a base frame 210, a printing mechanism 220, a scanning mechanism 230, a sealing mechanism 240, a conveying mechanism 250 and multiple sheet boxes 260. A sheet box 260 includes a box body 261 for storing a sheet medium. The box body 261 is detachably connected to the base frame 210, and the box body 261 has a disassembly position for being separated from the base frame 210 and a mounting position for cooperating with the base frame 210. In the sheet medium processing device 200 in the embodiment, the sheet box 260 is the slave device 013, and the box body 261 is the target object 015. When the box body 261 located at the disassembly position, it is in the first state, and when the box body 261 located at the mounting position, is in the second state.

The sheet medium processing device 200 further includes the first controller 012 as the master device (or part of the master device). The printing mechanism 220, the scanning mechanism 230, the sealing mechanism 240 and the conveying mechanism 250 are all electrically connected to the first controller 012. The sheet box 260 further includes the second controller 014 electrically connected to the first controller 012 and the detection component 016 electrically connected to the second controller 014. The detection component 016 is configured to detect whether the box body 261 is located at the disassembly position or the mounting position and feed back a detection result to the second controller 014. The second controller 014 determines whether the box body 261 is in the first state or the second state according to the information fed back by the detection component 016. The detection component 016 may be a photoelectric sensor, a mechanical sensor, a proximity switch, etc. In the embodiment of FIG. 6, detection components 016 correspond to second controllers 014 in one-to-one correspondence, that is, each second controller 014 is configured to only set the ID number of a sheet box 260 corresponding to the each second controller 014. In another optional embodiment, multiple sheet boxes 260 may share one second controller 014.

In a scene, before the ID number of the sheet box 260 is set, the box body 261 is no mounted on the base frame 210 and thus is located at the disassembly position, that is, is in the first state. When the ID number of the sheet box 260 is set, the user actively assembles the box body 261 on the base frame 210, so that the box body 261 is located at the mounting position, that is, is in the second state. As the mounting action of the box body 261 by the user is completed, the state of the box body 261 is switched from the first state to the second state. The change in the state of the box body 261 is detected by the detection component 016, the detection component 016 feeds back this information to the second controller 014, and the second controller 014 sends the ID number setting request to the first controller 012. After receiving the ID number setting request from the second controller 014, the first controller 012 generates the target ID number and broadcasts the setting command of the target ID number to second controllers 014 of all of the sheet boxes 260. After receiving the setting command of the target ID number, each second controller 014 determines whether the sheet box 260 corresponding to itself is in the ID number pending state. In a case where one second controller 014 determines that the sheet box 260 corresponding to itself is in the ID number pending state, the ID number of the sheet box 260 is set as the target ID number so that setting of the ID number of the sheet box 260 is completed.

In summary, the embodiments of the present application provide an ID number setting method and a system having master and slave devices. According to the ID number setting method and the system having master and slave devices provided in the embodiments of the present application, the slave device sends the ID number setting request to the master device when the state of the target object is changed from the first state to the second state, and the master device sends the setting command of the target ID number according to the received ID number setting request. Therefore, through the embodiments of the present application, the master device can set the ID number of the slave device according to the change in the state of the target object of the slave device; when setting the ID number of the slave device in the system, the user only needs to sequentially change states of target objects of multiple slave devices in a time division manner so that setting of ID numbers of the multiple slave devices can be sequentially completed. Therefore, through the embodiments of the present application, the number of slave devices in the system can be arbitrarily set, so that the problem in the related art of the maximum number of slave devices in the system being limited by the DIP switch of the slave device is solved, and the flexibility in the use of the system is improved. Moreover, it is not necessary to set an additional DIP switch for ID number setting in the slave device in the system, so that the costs of the system are reduced.

## Claims

1. An ID number setting method, applied to a system having master and slave devices, wherein the system comprises a master device (011) and a plurality of slave devices (013), each slave device (013) of the plurality of slave devices (013) comprises a detection component (016) and a target object (015), the target object is capable of being in a first state or a second state, the detection component is configured to detect a state of the target object, and the ID number setting method comprises:
broadcasting (S100), by the master device (011), a notification of entering an ID number setting mode to all of the plurality of slave devices (013);
after receiving, by the each slave device (013), the notification of entering the ID number setting mode, periodically detecting (S200), by the each slave device (013), a state of the target object (015) of the each slave device (013), and in response to detecting, by one slave device (013), that a state of a target object (015) of the one slave device (013) being changed from the first state to the second state, sending, by the one slave device (013), an ID number setting request to the master device (011);
after receiving an ID number setting request from any slave device (013) of the plurality of slave devices (013), generating (S300), by the master device (011), a target ID number, and broadcasting a setting command of the target ID number to all of the plurality of slave devices (013); and
after receiving the setting command of the target ID number, determining (S400), by the each slave device (013), whether the each slave device (013) is in an ID number pending state, and in response to determining, by the one slave device (013), that the one slave device (013) is in the ID number pending state, setting, by the one slave device (013), an ID number of the one slave device (013) as the target ID number.

2. The ID setting method according to claim 1, wherein after receiving the ID number setting request from any slave device (013) of the plurality of slave devices (013), generating (S300), by the master device (011), the target ID number comprises:
after receiving the ID number setting request from any slave device (013) of the plurality of slave devices (013), determining, by the master device (011), a reception serial number of a received ID number setting request, and generating the target ID number according to the reception serial number.

3. The ID number setting method according to claim 1, wherein after receiving the setting command of the target ID number, determining (S400), by the each slave device (013), whether the each slave device (013) is in the ID number pending state comprises:
after receiving the setting command of the target ID number, determining, by the each slave device (013), whether a value of the ID number of the each slave device (013) is an invalid value and whether the each slave device (013) has sent the ID number setting request to the master device (011) within a set time; and
in response to determining, by the one slave device (013), that the value of the ID number of the one slave device (013) is the invalid value and that the one slave device (013) has sent the ID number setting request to the master device (011) within the set time, determining, by the one slave device (013), that the one slave device (013) is in the ID number pending state.

4. A system having master and slave devices, comprising a master device and a plurality of slave devices (013), wherein the master device (011) comprises a first controller (012), each slave device (013) of the plurality of slave devices (013) comprises a second controller (014), a detection component (016), and a target object (015), the target object (015) is capable of being in a first state or a second state, and the detection component (016) is configured to detect a state of the target object (015), wherein
the first controller (012) of the master device (011) is configured to broadcast a notification of entering an ID number setting mode to second controllers (014) of all of the plurality of slave devices (013);
the second controller (014) of the each slave device (013) is configured to, after receiving the notification of entering the ID number setting mode, periodically detect a state of the target object (015) of the each slave device (013), and one slave device (013) is configured to in response to a state of a target object (015) of the one slave device (013) being changed from the first state to the second state, send an ID number setting request to the first controller (012) of the master device (011);
the first controller (012) of the master device (011) is further configured to, after receiving an ID number setting request from a second controller (014) of any slave device (013) of the plurality of slave devices (013), generate a target ID number, and broadcast a setting command of the target ID number to second controllers (014) of all of the slave devices (013); and
the second controller (014) of the each slave device (013) is further configured to, after receiving the setting command of the target ID number, determine whether the each slave device (013) corresponding to the second controller (014) is in an ID number pending state, and the one slave device (013) is configured to in response to determining that the one slave device (013) corresponding to the second controller (014) is in the ID number pending state, set an ID number of the one slave device (013) corresponding to the second controller (014) as the target ID number.

5. The system having master and slave devices according to claim 4, wherein the first controller (012) of the master device (011) is configured to, after receiving the ID number setting request from the second controller (014) of any slave device (013) of the plurality of slave devices (013), determine a reception serial number of a received ID number setting request, and generate the target ID number according to the reception serial number.

6. The system having master and slave devices according to claim 4, wherein the second controller (014) of the each slave device (013) is configured to, after receiving the setting command of the target ID number, determine whether a value of the ID number of the each slave device (013) corresponding to the second controller (014) is an invalid value and whether the each slave device (013) corresponding to the second controller (014) has sent the ID number setting request to the master device (011) within a set time, and the one slave device (013) is configured to in response to determining that a value of the ID number of the one slave device (013) corresponding to the second controller (014) is the invalid value and that the one slave device (013) corresponding to the second controller (014) has sent the ID number setting request to the master device (011) within the set time, determine that the one slave device (013) corresponding to the second controller (014) is in the ID number pending state.

7. The system having master and slave devices according to any one of claims 4 to 6, wherein the system is a storage locker (100), the storage locker (100) comprises a plurality of storage compartments (110), each storage compartment (110) of the plurality of storage compartments (110) comprises a compartment door (112) and a compartment body (111) for storing an item, the compartment body (111) has an opening for putting in or taking out the item, the compartment door (112) is movably connected to the compartment body (111), the compartment door (112) has an opening position for opening the opening and a closing position for closing the opening, the each slave device (013) is a corresponding one of the plurality of storage compartments (110), the target object (015) of the each slave device (013) is the compartment door (112), the compartment door (112) is in the first state in a case of being located at the opening position, and the compartment door (112) is in the second state in a case of being located at the closing position.

8. The system having master and slave devices according to claim 7, wherein an electric lock (113) is disposed between the compartment door (112) and the compartment body (111) in the each storage compartment (110), in a case where the electric lock (113) is locked, the compartment door (112) is locked at the closing position, in a case where the electric lock (113) is unlocked, the compartment door (112) is located at the opening position, and the second controller (014) of the each slave device (013) is further configured to, before periodically detecting a state of the compartment door (112), control the electric lock (113) to be unlocked to enable the compartment door (112) to be located at the opening position.

9. The system having master and slave devices according to claim 7, wherein the each storage compartment (110) further comprises a first sensor, the first sensor is configured to detect whether the compartment door (112) is located at the opening position or the closing position, and the detection component (016) is the first sensor; or
an electric lock (113) is disposed between the compartment door (112) and the compartment body (111) in the each storage compartment (110), in a case where the electric lock (113) is locked, the compartment door (112) is locked at the closing position, in a case where the electric lock (113) is unlocked, the compartment door (112) is located at the opening position, the electric lock (113) comprises a second sensor, the second sensor is configured to detect whether the electric lock (113) is in a locking state or an unlocking state, and the detection component (016) is the second sensor.

10. The system having master and slave devices according to any one of claims 4 to 6, wherein the system is a sheet medium processing device (200), the sheet medium processing device (200) comprises a base frame (210) and a plurality of sheet boxes (260), each sheet box (260) of the plurality of sheet boxes (260) comprises a box body (261) for storing a sheet medium, the box body (261) is detachably connected to the base frame (210), the box body (261) has a disassembly position for being separated from the base frame (210), and a mounting position for cooperating with the base frame (210), the each slave device (013) is a corresponding one of the plurality of sheet boxes (260), the target object (015) is the box body (261), and the box body (261) is in the first state in a case of being located at the disassembly position; the box body (261) is in the second state in a case of being located at the mounting position.

## Patentansprüche

1. Ein Verfahren zum Einstellen einer ID-Nummer, angewendet auf ein System mit Master- und Slave-Vorrichtungen, wobei das System eine Master-Vorrichtung (011) und mehrere Slave-Vorrichtungen (013) umfasst, jede Slave-Vorrichtung (013) der mehreren Slave-Vorrichtungen (013) eine Detektionskomponente (016) und ein Zielobjekt (015) umfasst, das Zielobjekt in einem ersten Zustand oder einem zweiten Zustand sein kann, die Detektionskomponente dazu eingerichtet ist, einen Zustand des Zielobjekts zu detektieren, und das Verfahren zum Einstellen einer ID-Nummer umfasst:
Senden (S100) einer Benachrichtigung über das Aufrufen eines ID-Nummer-Einstellmodus an alle der mehreren Slave-Vorrichtungen (013) durch die Master-Vorrichtung (011);
nach Empfang der Benachrichtigung über das Aufrufen des ID-Nummer-Einstellmodus durch jede Slave-Vorrichtung (013), periodisches Detektieren (S200) eines Zustands des Zielobjekts (015) der jeweiligen Slave-Vorrichtung (013) durch jede Slave-Vorrichtung (013), und als Reaktion auf das Detektieren durch eine Slave-Vorrichtung (013), dass ein Zustand eines Zielobjekts (015) der einen Slave-Vorrichtung (013) sich vom ersten Zustand in den zweiten Zustand ändert, Senden einer ID-Nummer-Einstellanforderung durch die eine Slave-Vorrichtung (013) an die Master-Vorrichtung (011);
nach Empfang einer ID-Nummer-Einstellanforderung von einer beliebigen Slave-Vorrichtung (013) der mehreren Slave-Vorrichtungen (013), Erzeugen (S300) einer Ziel-ID-Nummer durch die Master-Vorrichtung (011) und Senden eines Einstellbefehls der Ziel-ID-Nummer an alle der mehreren Slave-Vorrichtungen (013); und
nach Empfang des Einstellbefehls der Ziel-ID-Nummer, Bestimmen (S400) durch jede Slave-Vorrichtung (013), ob die jeweilige Slave-Vorrichtung (013) sich in einem ID-Nummer-Wartestatus befindet, und als Reaktion auf das Bestimmen durch die eine Slave-Vorrichtung (013), dass die eine Slave-Vorrichtung (013) sich in dem ID-Nummer-Wartestatus befindet, Einstellen einer ID-Nummer der einen Slave-Vorrichtung (013) als die Ziel-ID-Nummer durch die eine Slave-Vorrichtung (013).

2. Verfahren zum Einstellen einer ID-Nummer nach Anspruch 1, wobei nach Empfang der ID-Nummer-Einstellanforderung von einer beliebigen Slave-Vorrichtung (013) der mehreren Slave-Vorrichtungen (013), das Erzeugen (S300) der Ziel-ID-Nummer durch die Master-Vorrichtung (011) umfasst:
nach Empfang der ID-Nummer-Einstellanforderung von einer beliebigen Slave-Vorrichtung (013) der mehreren Slave-Vorrichtungen (013), Bestimmen einer Empfangsseriennummer einer empfangenen ID-Nummer-Einstellanforderung durch die Master-Vorrichtung (011) und Erzeugen der Ziel-ID-Nummer entsprechend der Empfangsseriennummer.

3. Verfahren zum Einstellen einer ID-Nummer nach Anspruch 1, wobei nach Empfang des Einstellbefehls der Ziel-ID-Nummer, das Bestimmen (S400) durch jede Slave-Vorrichtung (013), ob die jeweilige Slave-Vorrichtung (013) sich in dem ID-Nummer-Wartestatus befindet, umfasst:
nach Empfang des Einstellbefehls der Ziel-ID-Nummer, Bestimmen durch jede Slave-Vorrichtung (013), ob ein Wert der ID-Nummer der jeweiligen Slave-Vorrichtung (013) ein ungültiger Wert ist und ob die jeweilige Slave-Vorrichtung (013) die ID-Nummer-Einstellanforderung innerhalb einer gesetzten Zeit an die Master-Vorrichtung (011) gesendet hat; und
als Reaktion auf das Bestimmen durch die eine Slave-Vorrichtung (013), dass der Wert der ID-Nummer der einen Slave-Vorrichtung (013) der ungültige Wert ist und dass die eine Slave-Vorrichtung (013) die ID-Nummer-Einstellanforderung innerhalb der gesetzten Zeit an die Master-Vorrichtung (011) gesendet hat, Bestimmen durch die eine Slave-Vorrichtung (013), dass die eine Slave-Vorrichtung (013) sich in dem ID-Nummer-Wartestatus befindet.

4. Ein System mit Master- und Slave-Vorrichtungen, umfassend eine Master-Vorrichtung und mehrere Slave-Vorrichtungen (013), wobei die Master-Vorrichtung (011) einen ersten Controller (012) umfasst, jede Slave-Vorrichtung (013) der mehreren Slave-Vorrichtungen (013) einen zweiten Controller (014), eine Detektionskomponente (016) und ein Zielobjekt (015) umfasst, das Zielobjekt (015) in einem ersten Zustand oder einem zweiten Zustand sein kann, und die Detektionskomponente (016) dazu eingerichtet ist, einen Zustand des Zielobjekts (015) zu detektieren, wobei
der erste Controller (012) der Master-Vorrichtung (011) dazu eingerichtet ist, eine Benachrichtigung über das Aufrufen eines ID-Nummer-Einstellmodus an die zweiten Controller (014) aller der mehreren Slave-Vorrichtungen (013) zu senden;
der zweite Controller (014) jeder Slave-Vorrichtung (013) dazu eingerichtet ist, nach Empfang der Benachrichtigung über das Aufrufen des ID-Nummer-Einstellmodus, periodisch einen Zustand des Zielobjekts (015) der jeweiligen Slave-Vorrichtung (013) zu detektieren, und eine Slave-Vorrichtung (013) dazu eingerichtet ist, als Reaktion auf eine Änderung eines Zustands eines Zielobjekts (015) der einen Slave-Vorrichtung (013) vom ersten Zustand in den zweiten Zustand, eine ID-Nummer-Einstellanforderung an den ersten Controller (012) der Master-Vorrichtung (011) zu senden;
der erste Controller (012) der Master-Vorrichtung (011) ferner dazu eingerichtet ist, nach Empfang einer ID-Nummer-Einstellanforderung von einem zweiten Controller (014) einer beliebigen Slave-Vorrichtung (013) der mehreren Slave-Vorrichtungen (013), eine Ziel-ID-Nummer zu erzeugen und einen Einstellbefehl der Ziel-ID-Nummer an die zweiten Controller (014) aller der Slave-Vorrichtungen (013) zu senden; und
der zweite Controller (014) jeder Slave-Vorrichtung (013) ferner dazu eingerichtet ist, nach Empfang des Einstellbefehls der Ziel-ID-Nummer zu bestimmen, ob die jeweilige Slave-Vorrichtung (013), die dem zweiten Controller (014) entspricht, sich in einem ID-Nummer-Wartestatus befindet, und die eine Slave-Vorrichtung (013) dazu eingerichtet ist, als Reaktion auf das Bestimmen, dass die eine Slave-Vorrichtung (013), die dem zweiten Controller (014) entspricht, sich in dem ID-Nummer-Wartestatus befindet, eine ID-Nummer der einen Slave-Vorrichtung (013), die dem zweiten Controller (014) entspricht, als die Ziel-ID-Nummer einzustellen.

5. System mit Master- und Slave-Vorrichtungen nach Anspruch 4, wobei der erste Controller (012) der Master-Vorrichtung (011) dazu eingerichtet ist, nach Empfang der ID-Nummer-Einstellanforderung vom zweiten Controller (014) einer beliebigen Slave-Vorrichtung (013) der mehreren Slave-Vorrichtungen (013), eine Empfangsseriennummer einer empfangenen ID-Nummer-Einstellanforderung zu bestimmen und die Ziel-ID-Nummer entsprechend der Empfangsseriennummer zu erzeugen.

6. System mit Master- und Slave-Vorrichtungen nach Anspruch 4, wobei der zweite Controller (014) jeder Slave-Vorrichtung (013) dazu eingerichtet ist, nach Empfang des Einstellbefehls der Ziel-ID-Nummer zu bestimmen, ob ein Wert der ID-Nummer der jeweiligen Slave-Vorrichtung (013), die dem zweiten Controller (014) entspricht, ein ungültiger Wert ist und ob die jeweilige Slave-Vorrichtung (013), die dem zweiten Controller (014) entspricht, die ID-Nummer-Einstellanforderung innerhalb einer gesetzten Zeit an die Master-Vorrichtung (011) gesendet hat, und die eine Slave-Vorrichtung (013) dazu eingerichtet ist, als Reaktion auf das Bestimmen, dass ein Wert der ID-Nummer der einen Slave-Vorrichtung (013), die dem zweiten Controller (014) entspricht, der ungültige Wert ist und dass die eine Slave-Vorrichtung (013), die dem zweiten Controller (014) entspricht, die ID-Nummer-Einstellanforderung innerhalb der gesetzten Zeit an die Master-Vorrichtung (011) gesendet hat, zu bestimmen, dass die eine Slave-Vorrichtung (013), die dem zweiten Controller (014) entspricht, sich in dem ID-Nummer-Wartestatus befindet.

7. System mit Master- und Slave-Vorrichtungen nach einem der Ansprüche 4 bis 6, wobei das System ein Aufbewahrungsschrank (100) ist, der Aufbewahrungsschrank (100) mehrere Aufbewahrungsfächer (110) umfasst, jedes Aufbewahrungsfach (110) der mehreren Aufbewahrungsfächer (110) eine Fachklappe (112) und einen Fachkörper (111) zum Aufbewahren eines Gegenstands umfasst, der Fachkörper (111) eine Öffnung zum Einlegen oder Entnehmen des Gegenstands aufweist, die Fachklappe (112) beweglich mit dem Fachkörper (111) verbunden ist, die Fachklappe (112) eine Öffnungsposition zum Öffnen der Öffnung und eine Schließposition zum Schließen der Öffnung aufweist, jede Slave-Vorrichtung (013) eine entsprechende der mehreren Aufbewahrungsfächer (110) ist, das Zielobjekt (015) jeder Slave-Vorrichtung (013) die Fachklappe (112) ist, die Fachklappe (112) sich im ersten Zustand befindet, wenn sie sich an der Öffnungsposition befindet, und die Fachklappe (112) sich im zweiten Zustand befindet, wenn sie sich an der Schließposition befindet.

8. System mit Master- und Slave-Vorrichtungen nach Anspruch 7, wobei ein elektrisches Schloss (113) zwischen der Fachklappe (112) und dem Fachkörper (111) in jedem Aufbewahrungsfach (110) angeordnet ist, wobei, wenn das elektrische Schloss (113) verriegelt ist, die Fachklappe (112) an der Schließposition verriegelt ist, wenn das elektrische Schloss (113) entriegelt ist, die Fachklappe (112) sich an der Öffnungsposition befindet, und der zweite Controller (014) jeder Slave-Vorrichtung (013) ferner dazu eingerichtet ist, vor dem periodischen Detektieren eines Zustands der Fachklappe (112), das elektrische Schloss (113) zu entriegeln, um die Fachklappe (112) an der Öffnungsposition zu ermöglichen.

9. System mit Master- und Slave-Vorrichtungen nach Anspruch 7, wobei jedes Aufbewahrungsfach (110) ferner einen ersten Sensor umfasst, der erste Sensor dazu eingerichtet ist, zu detektieren, ob die Fachklappe (112) sich an der Öffnungsposition oder der Schließposition befindet, und die Detektionskomponente (016) der erste Sensor ist; oder
ein elektrisches Schloss (113) zwischen der Fachklappe (112) und dem Fachkörper (111) in jedem Aufbewahrungsfach (110) angeordnet ist, wobei, wenn das elektrische Schloss (113) verriegelt ist, die Fachklappe (112) an der Schließposition verriegelt ist, wenn das elektrische Schloss (113) entriegelt ist, die Fachklappe (112) sich an der Öffnungsposition befindet, das elektrische Schloss (113) einen zweiten Sensor umfasst, der zweite Sensor dazu eingerichtet ist, zu detektieren, ob das elektrische Schloss (113) in einem Verriegelungszustand oder einem Entriegelungszustand ist, und die Detektionskomponente (016) der zweite Sensor ist.

10. System mit Master- und Slave-Vorrichtungen nach einem der Ansprüche 4 bis 6, wobei das System eine Blattmedium-Verarbeitungsvorrichtung (200) ist, die Blattmedium-Verarbeitungsvorrichtung (200) einen Basisrahmen (210) und mehrere Blattkästen (260) umfasst, jeder Blattkasten (260) der mehreren Blattkästen (260) einen Kastenkörper (261) zum Aufbewahren eines Blattmediums umfasst, der Kastenkörper (261) lösbar mit dem Basisrahmen (210) verbunden ist, der Kastenkörper (261) eine Demontageposition zum Trennen vom Basisrahmen (210) und eine Montageposition zum Zusammenwirken mit dem Basisrahmen (210) aufweist, jede Slave-Vorrichtung (013) eine entsprechende der mehreren Blattkästen (260) ist, das Zielobjekt (015) der Kastenkörper (261) ist, und der Kastenkörper (261) sich im ersten Zustand befindet, wenn er sich an der Demontageposition befindet; der Kastenkörper (261) sich im zweiten Zustand befindet, wenn er sich an der Montageposition befindet.

## Revendications

1. Procédé de réglage de numéro ID appliqué à un système comportant des dispositifs maîtres et esclaves. dans lequel le système comprend un dispositif maître (011) et une pluralité de dispositifs esclaves (013), chaque dispositif esclave (013) de la pluralité de dispositifs esclaves (013) comprend un composant de détection (016) et un objet cible (015), l'objet cible est susceptible d'être dans un premier état ou un second état, le composant de détection est conçu pour détecter un état de l'objet cible, et le procédé de réglage de numéro ID comprend :
la diffusion (S100), par le dispositif maître (011), d'une notification d'entrée dans un mode de réglage de numéro ID à l'ensemble de la pluralité de dispositifs esclaves (013) ;
après la réception, par ledit chaque dispositif esclave (013), de la notification d'entrée dans le mode de réglage de numéro ID, la détection périodique (S200), par ledit chaque dispositif esclave (013), d'un état de l'objet cible (015) dudit chaque dispositif esclave (013), et en réponse à la détection, par un dispositif esclave (013), qu'un état d'un objet cible (015) dudit un dispositif esclave (013) est changé du premier état au second état, l'envoi, par ledit un dispositif esclave (013), d'une demande de réglage de numéro ID au dispositif maître (011) ;
après la réception d'une demande de réglage de numéro ID provenant de l'un quelconque dispositif esclave (013) de la pluralité de dispositifs esclaves (013), la génération (S300), par le dispositif maître (011), d'un numéro ID cible, et la diffusion une commande de réglage du numéro ID cible à l'ensemble de la pluralité de dispositifs esclaves (013) ; et
après la réception de la commande de réglage du numéro ID cible, la détermination (S400), par ledit chaque dispositif esclave (013), si ledit chaque dispositif esclave (013) est dans un état d'attente de numéro ID, et en réponse à la détermination, par ledit un dispositif esclave (013), que ledit un dispositif esclave (013) est dans un état d'attente de numéro ID, le réglage, par ledit un dispositif esclave (013), d'un numéro ID dudit dispositif esclave (013) comme le numéro ID cible.

2. Procédé de réglage d'ID selon la revendication 1, dans lequel, après la réception de la demande de réglage de numéro ID provenant de l'un quelconque dispositif esclave (013) de la pluralité de dispositifs esclaves (013), la génération (S300), par le dispositif maître (011), du numéro ID cible comprend :
après la réception de la demande de réglage de numéro ID provenant de l'un quelconque dispositif esclave (013) de la pluralité de dispositifs esclaves (013), la détermination, par le dispositif maître (011), d'un numéro de série de réception d'une demande de réglage de numéro ID reçue, et la génération du numéro ID cible selon le numéro de série de réception.

3. Procédé de réglage de numéro ID selon la revendication 1, dans lequel après la réception de la commande de réglage du numéro ID cible, la détermination (S400), par ledit chaque dispositif esclave (013), si ledit chaque dispositif (013) est dans l'état d'attente de numéro ID comprend :
après la réception de la commande de réglage du numéro ID cible, la détermination, par ledit chaque dispositif esclave (013), si une valeur du numéro ID dudit chaque dispositif esclave (013) est une valeur non valide et si ledit chaque dispositif esclave (013) a envoyé la demande de réglage de numéro ID au dispositif maître (011) dans un délai fixé ; et
en réponse à la détermination, par ledit un dispositif esclave (013), que la valeur du numéro ID dudit un dispositif esclave (013) est la valeur non valide et que ledit un dispositif esclave (013) a envoyé la demande de réglage de numéro ID au dispositif maître (011) dans le délai fixé, la détermination, par ledit un dispositif esclave (013), que ledit un dispositif esclave (013) est dans l'état d'attente de numéro ID.

4. Système comportant des dispositifs maîtres et esclaves, comprenant un dispositif maître et une pluralité de dispositifs esclaves (013), dans lequel le dispositif maître (011) comprend un premier contrôleur (012), chaque dispositif esclave (013) de la pluralité de dispositifs esclaves (013) comprend un second contrôleur (014), un composant de détection (016) et un objet cible (015), l'objet cible (015) est susceptible d'être dans un premier état ou un second état, et le composant de détection (016) est conçu pour détecter un état de l'objet cible (015), dans lequel
le premier contrôleur (012) du dispositif maître (011) est contrôleur pour diffuser une notification d'entrée dans un mode de réglage de numéro ID au second contrôleurs (014) de l'ensemble de la pluralité de dispositifs esclaves (013) ;
le second contrôleur (014) dudit chaque dispositif esclave (013) est conçu pour, après la réception de la notification d'entrée dans le mode de réglage de numéro ID, détecter périodiquement un état de l'objet cible (015) dudit chaque dispositif esclave (013), et un dispositif esclave (013) est conçu pour, en réponse à un état d'un objet cible (015) dudit un dispositif esclave (013) étant changé du premier état au second état, envoyer une demande de réglage de numéro ID au premier contrôleur (012) du dispositif maître (011) ;
le premier contrôleur (012) du dispositif maître (011) est en outre conçu pour, après la réception d'une demande de réglage de numéro ID provenant d'un second contrôleur (014) d'un quelconque dispositif esclave (013) de la pluralité de dispositifs esclaves (013), générer un numéro ID cible, et diffuser une commande de réglage du numéro ID cible au second contrôleurs (014) de l'ensemble des dispositifs esclaves (013) ; et
le second contrôleur (014) dudit chaque dispositif esclave (013) est en outre conçu pour, après la réception de la commande de réglage du numéro ID cible, déterminer si ledit chaque dispositif esclave (013) correspondant au second contrôleur (014) est dans un état d'attente de numéro ID, et ledit un dispositif esclave (013) est conçu pour, en réponse à la détermination que ledit un dispositif esclave (013) correspondant au second contrôleur (014) est dans l'état d'attente de numéro ID, régler un numéro ID dudit un dispositif esclave (013) correspondant au second contrôleur (014) comme le numéro ID cible.

5. Système comportant des dispositifs maîtres et esclaves selon la revendication 4, dans lequel le premier contrôleur (012) du dispositif maître (011) est conçu pour, après la réception de la demande de réglage de numéro ID provenant du second contrôleur (014) de l'un quelconque dispositif esclave (013) de la pluralité de dispositifs esclaves (013), déterminer un numéro de série de réception d'une demande de réglage de numéro ID, et générer le numéro ID cible selon le numéro de série de réception.

6. Système comportant des dispositifs maîtres et esclaves selon la revendication 4, dans lequel le second contrôleur (014) dudit chaque esclave (013) est conçu pour, après la réception de la commande de réglage du numéro ID cible, déterminer si une valeur du numéro ID dudit chaque dispositif esclave (013) correspondant au second contrôleur (014) est une valeur non valide et si ledit chaque dispositif esclave (013) correspondant au second contrôleur (014) a envoyé la demande de réglage de numéro ID au dispositif maître (011) dans le délai fixé, et ledit un dispositif esclave (013) est conçu pour, en réponse à la détermination qu'une valeur du numéro ID dudit un dispositif esclave (013) correspondant au second contrôleur (014) est la valeur non valide et que ledit un dispositif esclave (013) correspondant au second contrôleur (014) a envoyé la demande de réglage de numéro ID au dispositif maître (011) dans le délai fixé, déterminer que ledit un dispositif esclave (013) correspondant au second contrôleur (014) est dans l'état d'attente de numéro ID.

7. Système comportant des dispositifs maîtres et esclaves selon l'une quelconque des revendications 4 à 6, dans lequel le système set un casier de stockage (100), le casier de stockage (100) comprend une pluralité de compartiments de stockage (110), chaque compartiment de stockage (110) de la pluralité de compartiments de stockage (110) comprend une porte de compartiment (112) et un corps de compartiment (111) pour le stockage d'un article, le corps de compartiment (111) comporte une ouverture pour la mise ou le retrait de l'article, la porte de compartiment (112) est raccordée de façon mobile au corps de compartiment (111), la porte de compartiment (112) présente une position d'ouverture pour l'ouverture de l'ouverture et une position de fermeture pour la fermeture de l'ouverture, ledit chaque dispositif esclave (013) est un compartiment correspondant de la pluralité de compartiments de stockage (110), l'objet cible (015) dudit chaque dispositif esclave (013) est la porte de compartiment (112), la porte de compartiment (112) est dans le premier état dans le cas où elle est située dans la position d'ouverture, et la porte de compartiment (112) est dans le second état dans le cas où elle est située dans la position de fermeture.

8. Système comportant des dispositifs maîtres et esclaves selon la revendication 7, dans lequel une serrure électrique (113) est disposée entre la porte de compartiment (112) et le corps de compartiment (111) dans ledit chaque compartiment de stockage (110), dans le cas où la serrure électrique (113) est verrouillée, la porte de compartiment (112) est verrouillée dans la position de fermeture , dans le cas où la serrure électrique (113) est déverrouillée, la porte de compartiment (112) est située dans la position d'ouverture, et le second contrôleur (014) dudit chaque dispositif esclave (013) est en outre conçu pour, avant la détection périodique d'un état de la porte de compartiment (112), commander la serrure électrique (113) a être déverrouillée afin de permettre à la porte de compartiment (112) d'être située dans la position d'ouverture.

9. Système comportant des dispositifs maîtres et esclaves selon la revendication 7, dans lequel ledit chaque compartiment de stockage (110) comprend en outre un premier capteur, le premier capteur est conçu pour détecter si la porte de compartiment (112) est située dans la position d'ouverture ou la position de fermeture, et le composant de détection (016) est le premier capteur ; ou
une serrure électrique (113) est disposée entre la porte de compartiment (112) et le corps de compartiment (111) dans ledit chaque compartiment de stockage (110), dans le cas où la serrure électrique (113) est verrouillée, la porte de compartiment (112) est verrouillée dans la position de fermeture , dans le cas où la serrure électrique (113) est déverrouillée, la porte de compartiment (112) est située dans la position d'ouverture, la serrure électrique (113) comprend un second capteur, le second capteur est conçu pour détecter si la serrure électrique (113) est dans un état verrouillé ou un état déverrouillé, et le composant de détection (016) est le second capteur.

10. Système comportant des dispositifs maîtres et esclaves selon l'une quelconque des revendications 4 à 6, dans lequel le système est un dispositif de traitement de milieu en feuille (200), le dispositif de traitement de milieu en feuille (200) comprend un cadre de base (210) et une pluralité de boîtes à feuille (260), chaque boîte à feuille (260) de la pluralité de boîtes à feuille (260) comprend un corps de boîte (261) pour le stockage d'un milieu en feuille, le corps de boîte (261) est raccordé de manière amovible au cadre de base (210), le corps de boîte (261) comporte une position de démontage pour être séparé du cadre de base (210), et une position de montage pour être en coopération avec le cadre de base (210), ledit chaque dispositif esclave (013) est une boîte correspondante de la pluralité de boîtes à feuille (260), l'objet cible (015) est le corps de boîte (261), et le corps de boîte (261) est dans le premier état dans le cas où il est situé dans la position de démontage ; le corps de boîte (261) est dans le second état dans le cas où il est situé dans la position de montage.
